# EUROPÄISCHE PATENTSCHRIFT

(11) **EP 0 829 193 B1**
(45) Veröffentlichungstag und Bekanntmachung des Hinweises auf die Patenterteilung: **10.03.2004**
(21) Anmeldenummer: 97115671.6
(22) Anmeldetag: 10.09.1997
(51) Int. Cl.: A01C 7/18, A01C 7/04

(54) **Vergleichmässigungseinrichtung für die Dosierung von Granulat, insbesondere zur Verwendung bei einer Drillmaschine (Sämaschine)**
Device for regulating the discharge of granular material, especially for use in a seed drill
Appareil pour réguler la distribution de matériau granulaire, spécialement utilisé dans un semoir

(30) Priorität: 11.09.1996 DE 19636787
(43) Veröffentlichungstag der Anmeldung: 18.03.1998
(73) Patentinhaber: Universität Hohenheim, 70599 Stuttgart (DE)
(72) Erfinder: Müller, Joachim, Dr., 72631 Aichtal (DE); Köller, Karlheinz, Prof, Dr., 53340 Meckenheim (DE)
(74) Vertreter: Pietruk, Claus Peter, Dipl.-Phys.

(56) Entgegenhaltungen:
- EP-A- 0 350 634
- DE-C- 62 541
- FR-A- 1 037 506
- US-A- 4 669 922

## Beschreibung

Die vorliegende Erfindung betrifft eine Vergleichmäßigungseinrichtung für Granulat nach dem Oberbegriff des unabhängigen Anspruches. Derartige Vergleichmäßigungseinrichtungen finden Anwendung insbesondere in Säscharen einer Drillmaschine.

Bei der Aussaat von Saatgut befindet sich dieses zunächst in einem Saatgutvorratsbehälter und muß aus diesem heraus in Säfurchen eingebracht werden und hernach mit lockerer Erde bedeckt werden. Sämaschinen werden dabei verwendet, um unter schonender Behandlung aus dem Saatgutvorratsbehälter Samenkörner zu erfassen, diese Samenkörner in möglichst gleichbleibendem, saatgutspezifischem Kornsollabstand längs der Säfurchen mit einstellbarer Tiefe in den vorbereiteten Boden einzubringen, den erforderlichen Bodenschluß herzustellen, und schließlich die abgelegten Samenkörner wieder mit lockerer Erde zu bedecken. Sieht man hierbei von jenen Punkten ab, die agrarspezifisch sind, so gibt es auch andere Anwendungen, bei der eine solche Dosierung von Einzelpartikeln eines Granulats gewünscht ist.

Ein grundsätzliches Problem besteht nun darin, die einzelnen Partikel (beziehungsweise Samenkörner) so auszugeben, daß bezogen auf die agrarwirtschaftliche Anwendung letztendlich ungünstige Standraumverhältnisse für die Einzelpflanzen vermieden werden.

Es wird seit langem daran gearbeitet, eine optimale Aussaat zu erreichen. Vergleichmäßigungseinrichtungen sind dabei aus unterschiedlichen Quellen bekannt. So sind Lösungen bekanntgeworden, die sich auf die Optimierung der Dosiereinrichtung an sich konzentrieren.

Die EP 0 583 571 A1 schlägt eine Vergleichmäßigungseinrichtung in Form einer V-Profilrolle vor, welche direkt in das Säschar eingearbeitet ist.

Aus dem Aufsatz "Verbesserte Aussaatgüte von Drillmaschinen" von E.V. Cumakov und R. Sovcek aus Zf. Agrartechnik, 27. Jahrgang, Heft 10, Oktober 1977, Seiten 454/455 ist eine weitere Vorrichtung zur Ablage von Saatgut bekannt.

Die EP 0 350 634 A2 beschreibt eine Sävorrichtung mit einem oder mehreren Vorratsbehältern zum Ablegen von Samenkörnern in von der Säschar gezogenen Säfurchen im Boden, die zwischen dem Vorratsbehälter und dem Boden angeordnet ist und etwa in Fahrrichtung ausgerichteten Rinnen aufweist, welche mittels einer oder mehrerer Antriebe in Schwingungen versetzt werden, wobei die jeweilige Rinne mit ihrem Antrieb im Säschar angeordnet ist.

Die DE-PS 62541 beschreibt Saatleitungsröhren für Drillmaschinen, welche zickzackförmig gebogen oder im Inneren mit vorspringenden Zungen oder mit Drähten oder mit zickzackförmig oder schraubenförmig gebogenen Blechen versehen sind, zum Zweck, die Körner während des Falles zu zerstreuen und an verschiedenen Stellen des Bodens niederfallen zu lassen.

Die FR 1.037.506 beschreibt eine Vereinzelungsvorrichtung, bei der am Ende eines Fallrohres vor Ablage des Saatgutes auf den Boden ein Vereinzelungsrad, ein sogenanntes Zellrad vorgesehen ist.

Die US-PS 4,669,922 beschreibt ein pneumatisches System zur Ablage von Korn und/oder granularem Dünger.

Die DE 44 19 964 C2 offenbart eine S-förmige Saatgutleitung, die zur Reduzierung der Luftgeschwindigkeit und der Aufschlagenergie von Körnern dient.

Die DE 26 05 017 A1 beschreibt eine Hackschar für Bandsaat, bei welchem Saatgut in einem mehrere Zentimeter breiten Band abgelegt wird.

Die DE 72 19 816 U beschreibt eine weitere Bandsäschar zur Verbesserung einer gleichmäßigen Breitverteilung der Samenkörner innerhalb einer Bandsaatfurche.

Ungeachtet der langjährigen Bemühungen um ein verbessertes Aussaatergebnis besteht aber immer noch der Wunsch, eine verbesserte Granulatvereinzelung mit einfachen Mitteln ohne überproportionalen technischen Aufwand zu bewerkstelligen, wobei innerhalb einer Ausbring- bzw. Ablagereihe Partikel bzw. Samenkörner nicht zufallsverteilt, sondern möglichst mit gleichbleibendem Abstand ausgebracht werden sollen.

Diese Aufgabe wird erfindungsgemäß durch die im Anspruch 1 angegebenen Merkmale gelöst. Ein erster wesentlicher Aspekt der Erfindung ist somit darin zu sehen, daß bei einer Vergleichmäßigungseinrichtung für Granulat mit einem Vorratsbehälter und einer Austragsleitung, die mit Zick-Zack-Leitungselementen vorgesehen ist, dass die Leitungselemente jeweils derart schräg zueinander angeordnet sind, dass sich die einzelnen Partikel hintereinander anordnen, wobei zumindest das endseitige Leitungselement einen rinnenförmigen Querschnitt aufweist, um so die Vergleichmäßigung der Partikelabstände zu erreichen, insbesondere zum Einbau in die Säschar einer Drillmaschine.

Ein erster wesentlicher Aspekt liegt demnach darin, daß am Eingang zur Dosier- (bzw. Sä-) Leitung die vom Stand der Technik her bekannten Dosiermittel montiert sind, die Vergleichmäßigung der Partikel (bzw. Samenkörner) dann jedoch über geeignete Leitungselemente, nämlich über die aus auf besondere Weise schräg angeordneten Rinnen zusammengesetzte Kaskadenleitung bzw. -führung erfolgt. Damit hat das Patent die Erkenntnis, daß es möglich ist, das Schar für die Granulatpartikel bzw. für die Samenkörner durch eine mehrteilige kaskadenförmige Verteilleitung bzw. Verteilrinne zu realisieren, die die Partikel durch mehrmalige Richtungsänderung vereinzelt und quasi ausgereiht Stück für Stück ausgetragen werden. Der besondere Vorzug dieser Lösung besteht darin, daß nur ein extrem geringer technischer Mehraufwand erforderlich ist und insbesondere keine beweglichen Bauteile erforderlich sind.

Im Verhältnis zu den bis dato bekannt gewordenen Drillmaschinen ist die Ablagegenauigkeit der Samenkörner ganz wesentlich verbessert; der Variationskoeffizient VK der Abstände zwischen den Samenkörnern sinkt bei optimaler Einstellung der Sämaschine im allgemeinen und der Vergleichmäßigungseinrichtung im besonderen von 100 % auf 60 %.

Besondere Ausgestaltungen und Einzelheiten der erfindungsgemäßen Vergleichmäßigungseinrichtung sind in den Unteransprüchen spezifiziert.

Im Hinblick auf die bevorzugte Anwendung der Vergleichmäßigungseinrichtung in Verbindung mit einer Sämaschine ist vorgesehen, unterschiedlichen Saatgütern entsprechend und insoweit deren spezifische Eigenschaften berücksichtigend die kaskadenförmig angeordneten Leitungselemente als austauschbare leicht zu montierende Einbaumodule für die Säschare auszubilden.

Die Einzelheiten der Vergleichmäßigungseinrichtung werden im folgenden anhand der Zeichnung näher erläutert. Diese zeigt in
- Fig. 1: eine an eine Sä- / Drillmaschine anbaubare Vergleichmäßigungseinrichtung in Prinzipdarstellung, und zwar in Seitenansicht;
- Fig. 2: eine Schnittdarstellung durch ein V-förmiges Leitungselement der Vergleichmäßigungseinrichtung nach Fig. 1 längs der Schnittlinie II-II gemäß Fig. 1.

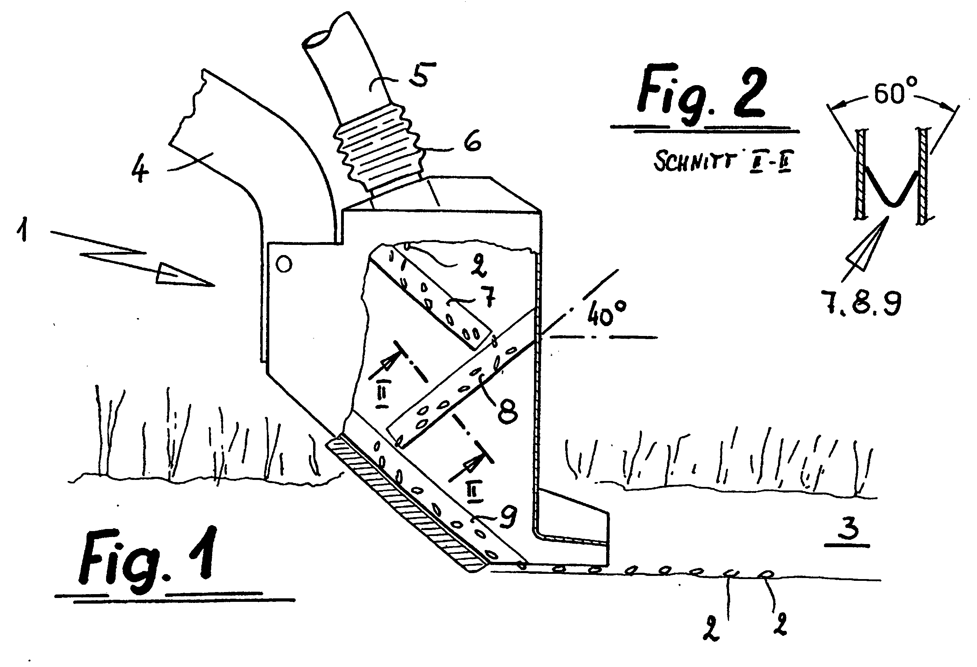

In Fig. 1 ist eine an eine - nicht dargestellte - Drillmaschine anmontierbare vergleichmäßigungseinrichtung 1 dargestellt, mittels der die Samenkörner 2 einzeln nacheinander in einer Säfurche 3 abgelegt werden (sollen). Im Idealfall wäre der Ablegeabstand zwischen den einzelnen Samenkörnern 2 (im wesentlichen) stets gleich, um einerseits Fehlstellen und Doppelstellen zu vermeiden und andererseits für die entstehenden Einzelpflanzen eine optimale Standraumverteilung zu bieten.

Die Vergleichmäßigungseinrichtung 1 ist in an sich bekannter Weise über eine heb- und senkbare Haltevorrichtung 4 an der Drillmaschine angekoppelt. Die Samenkörner 2 befinden sich in einem an der Drillmaschine vorgesehenen - ebenfalls nicht dargestellten - vorratsbehälter, an dem eine Austrag- beziehungsweise Säleitung 5 anschließt. Diese Säleitung 5 ist ihrerseits über ein Adapterelement 6 mit der Vergleichmäßigungseinrichtung 1 gekoppelt und führt dieser die aus dem Vorratsbehälter ausfließenden Samenkörner 2 zu.

Die Vergleichmäßigungseinrichtung 1 ihrerseits besteht aus in die Säscharen der Drillmaschine eingebauten mehreren (gemäß Ausführungsbeispiel 3) zick-zack-förmig angeordneten beziehungsweise relativ zueinander eine Kaskade bildenden Leitungselementen 7, 8, 9, durch die die Samenkörner 2 eins nach dem andern abgleiten. Die Samenkörner 2 fallen von der Säleitung 5 auf das erste Leitungselement 7, fallen an deren Ende auf das zweite, mittlere Leitungselement 8 und schließlich auf das dritte letzte Leitungselement 9. Am Ende dieses dritten Leitungselements 9 schließlich fallen die Samenkörner 2 in die Säfurche 3 und es hat sich gezeigt, daß mit dieser in die Säscharen eingebauten kaskadenförmigen Vergleichmäßigungseinrichtung 1 relativ gleichmäßige Abstände zwischen den Samenkörnern 2 erreichbar sind (VK = 60 %).

Die bisherigen Erfahrungen haben auch gezeigt, daß drei-teilige Kaskaden optimal sind; ein viertes oder gar fünftes Leitungselement hat keine nennenswerte Verbesserung erbracht.

Im Hinblick auf die Rinnenform, d.h. die Querschnittsform der Leitungselemente 7, 8, 9 hat es sich gezeigt, daß ein V-förmiges Profil (vergleiche Fig. 2) mit einem Öffnungswinkel von 60° oder auch runde, insbesondere halbrunde Profile sehr gute Ergebnisse zeigen.

Was den Anstell- beziehungsweise Neigungswinkel der Leitungselemente 7, 8, 9 angeht, so hat sich bei den Versuchen ein Winkel von 40° als optimal erwiesen.

Es versteht sich von selbst, daß - bezugnehmend auf die bevorzugte Verwendung der Vergleichmäßigungseinrichtung 1 in Verbindung mit Sämaschinen - unterschiedlichen Korngrößen und auch Kornformen entsprechend die Rinnenform und der Anstellwinkel spezifischen Verwendungsfällen entsprechend spezifische Leitungselemente 7, 8, 9 optimale Ergebnisse erbringen. Um diesen unterschiedlichen Verwendungsfällen jeweils in einfacher Weise gerecht werden zu können, sind austauschbare Module vorgesehen. Je nach Saatgut können so die Säschare und letztlich die Drillmaschine in einfacher Weise umgerüstet werden.

Abschließend sei noch angemerkt, daß längs der Leitungselemente 7, 8, 9 auch Barrikaden oder dergleichen Elemente angeordnet werden können, um die Samenkörner 2 gegebenenfalls weiter auflockern zu können.

## Patentansprüche

1. Vergleichmäßigungseinrichtung für Granulat aus einem Vorratsbehälter mit einer Austragsleitung, die mit Zick-Zack-Leitungselementen vorgesehen ist, **dadurch gekennzeichnet, dass** die Leitungselemente (7, 8, 9) jeweils derart schräg zueinander angeordnet sind, dass sich die einzelnen Partikel hintereinander anordnen, wobei zumindest das endseitige Leitungselement einen rinnenförmigen Querschnitt aufweist, um so die Vergleichmäßigung der Partikelabstände zu erreichen, insbesondere zum Einbau in die Sähschar einer Drillmaschine.

2. Vergleichmäßigungseinrichtung nach Anspruch 1, **dadurch gekennzeichnet, dass** der Anstellwinkel der Leitungselemente (7, 8, 9) etwa 40° beträgt.

3. Vergleichmäßigungseinrichtung nach Anspruch 1 oder 2, **dadurch gekennzeichnet, dass** die Leitungselemente (7, 8, 9) ein V-förmiges Profil mit vorzugsweise einem Öffnungswinkel von 60° haben.

4. Vergleichmäßigungseinrichtung nach Anspruch 1 oder 2,
**dadurch gekennzeichnet,**
**daß** die Leitungselemente (7, 8, 9) ein rundes, insbesondere halbrundes Profil haben.

5. vergleichmäßigungseinrichtung nach einem der Ansprüche 1 bis 4,
**dadurch gekennzeichnet,**
**daß** die Dimension des Profilquerschnitts in Abhängigkeit von der Art des Granulats gewählt ist.

6. Drillmaschine, bei der Saatgut über Saatleitungen Säscharen zugeführt wird und bei der den Säscharen je eine vergleichmäßigungseinrichtung nach einem der Ansprüche 1 bis 5 zugeordnet ist,
**dadurch gekennzeichnet,**
**daß** die Vergleichmäßigungseinrichtung (1) durch unterschiedlichen Saatgütern entsprechende austauschbare, modulare Leitungselemente (7, 8, 9) unterschiedlichen Profils und/oder mit unterschiedlichen Gleiteigenschaften realisiert sind.

## Claims

1. Averaging out device for granulate from a storage container with a delivery line, provided with zigzag line elements, **characterised in that** the line elements (7, 8, 9) are arranged in each case diagonally to one another in such a way that the individual particles are arranged in succession, wherein at least the end line element has a groove-shaped cross-section, in order thus to achieve averaging out of the distances between the particles, in particular for installing in the sowing share of a drilling machine.

2. Averaging out device according to claim 1, **characterised in that** the setting angle of the line elements (7, 8, 9) is approximately 40°.

3. Averaging out device according to claim 1 or 2, **characterised in that** the line elements (7, 8, 9) have a U-shaped profile with preferably an opening angle of 60°.

4. Averaging out device according to claim 1 or 2, **characterised in that** the line elements (7, 8, 9) have a circular, in particular semi-circular, profile.

5. Averaging out device according to one of claims 1 to 4, **characterised in that** the dimension of the profile cross-section is chosen as a function of the type of granulate.

6. Drilling machine, in which seed material is supplied to sowing shares via seed lines and in which one averaging out device according to one of claims 1 to 5 is allocated to each of the sowing shares, **characterised in that** the averaging out device (1) is produced by replaceable, modular line elements (7, 8, 9), corresponding to different seed materials, of different profile and/or with different sliding properties.

## Revendications

1. Appareil pour réguler la distribution de matériau granulaire provenant d'un réservoir de stockage, doté d'une conduite d'évacuation munie d'éléments de conduite en zigzag, **caractérisé en ce que** les'éléments de conduite (7, 8, 9) sont respectivement disposés de manière inclinée l'un vers l'autre de telle sorte que les particules individuelles se placent les unes derrière les autres, l'élément terminal de conduite au moins présentant une section en forme de gouttière, afin d'atteindre ainsi la régulation des intervalles des particules, notamment pour les insérer dans le soc de semis d'une machine à semer.

2. Appareil pour réguler la distribution selon la revendication 1, **caractérisé en ce que** l'angle de réglage des éléments de conduite (7, 8, 9) est d'environ 40°.

3. Appareil pour réguler la distribution selon la revendication 1 ou 2, **caractérisé en ce que** les éléments de conduite (7, 8, 9) ont un profil en forme de V avec un angle d'ouverture de 60° de préférence.

4. Appareil pour réguler la distribution selon la revendication 1 ou 2, **caractérisé en ce que** les éléments de conduite (7, 8, 9) ont un profil rond, notamment demi-rond.

5. Appareil pour réguler la distribution selon l'une des revendications 1 à 4, **caractérisé en ce que** la dimension de la section de profil est choisie en fonction du type de matériau granulaire.

6. Machine à semer, dans le cas de laquelle les semences sont amenées aux semoirs à l'aide de conduites á semence, et dans le cas de laquelle un appareil pour réguler la distribution selon l'une des revendications 1 à 5 est attribué à chaque semoir, **caractérisée en ce que** l'appareil pour réguler la distribution (1) est réalisé par des éléments de conduites (7, 8, 9) modulaires, interchangeables, correspondant aux différentes semences, de profils différents et/ou avec différentes propriétés de glissement.
